# EUROPÄISCHE PATENTSCHRIFT

(11) **EP 2 340 234 B1**
(45) Veröffentlichungstag und Bekanntmachung des Hinweises auf die Patenterteilung: **08.08.2012**
(21) Anmeldenummer: 09736229.7
(22) Anmeldetag: 16.10.2009
(51) Int. Cl.: C03C 17/00

(54) **PLATTENMATERIAL UND VERFAHREN ZUM HERSTELLEN EINES PLATTENMATERIALS**
PLATE MATERIAL AND METHOD FOR MANUFACTURING A PLATE MATERIAL
MATÉRIAU EN PLAQUE ET PROCÉDÉ DE PRODUCTION D'UN MATÉRIAU EN PLAQUE

(30) Priorität: 17.10.2008 ES 200803070
(43) Veröffentlichungstag der Anmeldung: 06.07.2011
(73) Patentinhaber: BSH Bosch und Siemens Hausgeräte GmbH, 81739 München (DE)
(72) Erfinder: BUÑUEL MAGDALENA, Miguel Angel, E-50017 Zaragoza (ES); ESTER SOLA, Francisco Javier, E-50001 Zaragoza (ES); GARCIA HERRER, Antonio José, E-50015 Zaragoza (ES); GARCIA JIMENEZ, Jose-Ramon, E-50009 Zaragoza (ES); MERINO RUBIO, Rosa Isabel, E-50018 Zaragoza (ES); SCHMALENSTROT, Rene, E-50010 Zaragoza (ES); PLANAS LAYUNTA, Fernando, E-50009 Zaragoza (ES)
(86) Internationale Anmeldenummer: PCT/EP2009/063535
(87) Internationale Veröffentlichungsnummer: WO 2010/043697

(56) Entgegenhaltungen:
- WO-A1-96/31995
- WO-A1-03/008355
- DE-A1- 10 314 070
- DE-A1- 19 527 823

## Beschreibung

Die Erfindung geht aus von einem Plattenmaterial, insbesondere von einer Kochfeld-Abdeckplatte, bestehend aus einem Basismaterial und wenigstens einer Beschichtung. Ferner betrifft die Erfindung ein Verfahren zum Herstellen eines solchen Plattenmaterials.

Aus der EP 0819366 B1 ist ein Plattenmaterial zum Herstellen einer Abdeckplatte für ein Induktionskochfeld bekannt, die aus einem Basismaterial und einer Beschichtung besteht. Das Basismaterial besteht aus einer nicht näher spezifizierten Keramik und es werden verschiedene mögliche Materialien für die Beschichtung vorgeschlagen. In einem Ausführungsbeispiel der EP 0819366 B1 wird vorgeschlagen, die Beschichtung aus einem glasfaserverstärkten Material herzustellen.

Abdeckplatten für Kochfelder bestehen in der Regel aus einem in der Herstellung sehr aufwendigen Glaskeramikmaterial. Insbesondere in Anwendungen für Haushaltsgeräte muss das Plattenmaterial temperaturbeständig bis wenigstens 700°C sein und über gute Reinigungseigenschaften durch eine robuste und glatte Oberfläche verfügen. Die hohe thermische Leitfähigkeit solcher Glaskeramikplatten kann bei der Verwendung als Abdeckplatte von Kochfeldern mit Strahlungsheizkörpern vorteilhaft sein. Bei der Verwendung als Abdeckplatte für Induktionskochfelder wird jedoch die Wärme des auf die Abdeckplatte abgestellten und durch die Induktoren erhitzten Kochgeschirrelements auf die unter der Glaskeramikplatte angeordnete Elektronik übertragen, was in der Regel unerwünscht und unvorteilhaft ist. Die Verwendung bekannter Glaskeramikplatten aus Strahlungskochfeldern zur Abdeckung von Induktionskochfeldern ist daher weit weniger vorteilhaft als es auf den ersten Blick erscheint.

Der Erfindung liegt daher insbesondere die Aufgabe zugrunde, ein leichtes, stabiles und temperaturbeständiges Plattenmaterial mit verbesserten Eigenschaften insbesondere bei der Verwendung in Induktionskochfeldern bereitzustellen.

Die Aufgabe wird gelöst durch ein Plattenmaterial bzw. ein Verfahren zum Herstellen eines solchen Plattenmaterials nach den unabhängigen Ansprüchen. Vorteilhafte Weiterbildungen der Erfindung ergeben sich aus den Unteransprüchen.

Die Erfindung geht aus von einem Plattenmaterial, insbesondere einer Kochfeld-Abdeckplatte. Das Plattenmaterial besteht aus einem Basismaterial und wenigstens einer Beschichtung.

Um ein kostengünstiges, leichtes, stabiles, temperaturresistentes und/oder thermisch gut isolierendes Plattenmaterial bereitstellen zu können, wird vorgeschlagen, das Basismaterial als ein aus einer keramischen Matrix und Verstärkungsfasern hergestelltes Pressmaterial auszubilden. Durch die Faserverstärkung kann auch bei einer vergleichsweise geringen Dicke des Basismaterials eine hohe Stabilität erreicht werden, und das insbesondere bei Kochfeldern wichtige Kriterium der geringen thermischen Expansion kann durch die Verwendung der Matrix mit den Verstärkungsfasern in einer einfachen Weise erreicht werden. Ähnlich wie in Keramiken, in welchen die geringe thermische Expansion der Glasfaser die Expansion der kristallinen Komponenten auffängt, blockieren die Verstärkungsfasern des Basismaterials die Expansion der keramischen Matrix. Daher kann ein stabiles Plattenmaterial mit einem geringen Wärmeausdehnungskoeffizienten erreicht werden. Die Reinigungseigenschaften und eine notwendige Härte der Oberfläche können durch eine geeignete Wahl der Beschichtung des Plattenmaterials erreicht werden.

Das Plattenmaterial ist mehrschichtig und das Basismaterial bildet vorzugsweise die dickste der Schichten. Gattungsgemäße Plattenmaterialien können zur Herstellung von Kochfeld-Abdeckplatten insbesondere dann verwendet werden, wenn die thermische Expansion weniger als 0,3 x 10⁻⁶ pro Kelvin beträgt. Die Vickers-Härte liegt vorzugsweise oberhalb von 400 HV und die Biegesteifigkeit liegt vorzugsweise oberhalb von 100 MPa.

Das erfindungsgemäße Plattenmaterial übersteht schadlos Belastungen auch mit sehr hohen Temperaturgradienten und hat eine hohe thermische Schockbeständigkeit. Durch die heterogene Struktur des Basismaterials wird die Wärmeleitfähigkeit gesenkt, was das Plattenmaterial mit einer besonderen Eignung zur Verwendung in Induktionskochfeldern ausstattet.

Das Material der keramischen Matrix kann beispielsweise Quarz bzw. Siliziumdioxid, reines Aluminiumoxid bzw. Tonerde oder eine Mischung dieser Materialien mit geringen Anteilen von anderen keramischen Materialien wie Kalziumoxide oder Magnesia und/oder Bindemitteln sein. Prinzipiell ist die Verwendung einer großen Vielzahl von keramischen Grundmaterialien zur Herstellung der Matrix denkbar.

Die Verstärkungsfasern sind vorzugsweise Glasfasern, denkbar ist auch der Einsatz von Polymerfasern wie Kevlar, Aramidfasern oder dergleichen und keramischen Fasern wie beispielsweise Kohlefasern, Mullit oder Siliziumkarbit. In einem bevorzugten Ausführungsbeispiel der Erfindung ist die keramische Matrix eine Siliziumoxid- und/oder Silikatmatrix und die Verstärkungsfasern sind Glasfasern. Auch eine Mischung verschiedener Fasertypen ist denkbar.

Der durch die Verstärkungsfasern erreichte Stabilitätszuwachs kann maximiert werden, wenn die Verstärkungsfasern zumindest teilweise ein Gewebe bilden, das in das Basismaterial eingearbeitet ist.

Versuche haben ergeben, dass die besten Eigenschaften erreicht werden können, wenn die Dicke der Verstärkungsfasern zwischen 6 und 7 µm liegt. Aufgrund der hohen Stabilität des Plattenmaterials sind für die Verwendung in Kochfeldern Dicken des Basismaterials zwischen 3 und 4 mm ausreichend.

Vorzugsweise hat das Plattenmaterial eine Temperaturbeständigkeit von bis zu wenigstens 1200°C, was weit über der Temperaturbeständigkeit von 700°C liegt, die mit herkömmlichen Glaskeramikplatten erreichbar ist. Der Fachmann weiß, dass zum Erreichen der geforderten Temperaturbeständigkeit insbesondere von weniger temperaturbeständigen Beschichtungen abgesehen werden muss.

Das Basismaterial kann in einer besonders kostengünstigen Ausgestaltung der Erfindung ein kaltgepresstes Material sein. Es sind jedoch auch in einem Heißpressverfahren hergestellte Basismaterialien denkbar.

Die Reinigungseigenschaften der Oberfläche und die Härte der Oberfläche können verbessert bzw. erhöht werden, wenn die Beschichtung eine Glasur umfasst. Es sind glasartige und keramische Glasuren denkbar. Die Glasuren können die Oberflächenporosität des Basismaterials eliminieren und die Härte der Oberfläche erhöhen. Dadurch kann die Lebensdauer des Plattenmaterials verlängert werden und die Reinigungseigenschaften können verbessert werden. Ferner eröffnet die Verwendung von Glasuren, die auch bunt sein können, neue Möglichkeiten im Design. Die Vorteile durch ein flexibleres Design kommen insbesondere bei der Verwendung der erfindungsgemäßen Plattenmaterialien in sichtbaren Bereichen von Hausgeräten, insbesondere als Abdeckplatte für Kochfelder, zum Tragen. Die Glasur kann insbesondere auch in Form von Oberflächenmarkierungen aufgebracht sein. Die Oberflächenmarkierungen können beispielsweise verschiedene Heizzonen des Kochfelds visualisieren, Informationen zu einer Benutzerschnittstelle enthalten und/oder ein Markenzeichen darstellen.

In einer weiteren Ausgestaltung der Erfindung wird vorgeschlagen, dass die Beschichtung eine Glasur und eine zwischen der Glasur und dem Basismaterial aufgebrachte Siebdruckschicht mit Oberflächenmarkierungen umfasst. Die Siebdruckschicht kann vorteilhaft durch die insbesondere transparente Glasur geschützt werden, so dass sie auch bei intensivem Gebrauch eines mit dem erfindungsgemäßen Plattenmaterial abgedeckten Kochfelds nicht verschleißt.

Eine Staubbildung in einem von dem Plattenmaterial abgedeckten Innenraum durch ein Abbröckeln des Materials der keramischen Matrix oder durch ein Abbrechen von kleinen Teilen der Verstärkungsfasern kann vermieden werden, wenn das Plattenmaterial von beiden Seiten beschichtet ist.

Die thermische Leitfähigkeit des Plattenmaterials kann im Vergleich zu Glaskeramikplatten reduziert werden, wenn das Plattenmaterial porös ist. Die Vorteile dieser Porosität kommen insbesondere bei der Verwendung des Plattenmaterials in Induktionskochfeldern zum Tragen.

In einer Weiterbildung der Erfindung wird vorgeschlagen, dass das Plattenmaterial zusätzlich eine ferromagnetische Schicht umfasst. Die Schicht kann insbesondere aus Graphit bestehen. Die Graphitschicht kann zwischen einem Basismaterial und einer Beschichtung aus Siliziumcarbit angeordnet sein und ein induktives Heizen des Plattenmaterials ermöglichen, während das Basismaterial einen Wärmetransport in eine Richtung unterdrückt. Das derart hergestellte Plattenmaterial kann beispielsweise zum Herstellen von Ofenmuffeln verwendet werden, die auch in industriellen Anwendungen wie beispielsweise Brennöfen oder Emaillierungsöfen zum Einsatz kommen können.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Abdeckplatte aus einem Plattenmaterial,
- Fig. 2: einen Schichtaufbau des Plattenmaterials der Abdeckplatte aus Figur 1 mit einem Basismaterial und mehreren Beschichtungen,
- Fig. 3: einen Schichtaufbau eines Plattenmaterials nach einer weiteren Ausgestaltung der Erfindung,
- Fig. 4: einen Schichtaufbau eines Plattenmaterials nach einer weiteren Ausgestaltung der Erfindung mit einer ferromagnetischen Schicht,
- Fig. 5: eine Abdeckplatte für ein Kochfeld nach einer weiteren Ausgestaltung der Erfindung mit einer Siebdruckschicht, die Oberflächen markiert,
- Fig. 6: eine Abdeckplatte aus einem Plattenmaterial nach einer weiteren Ausgestaltung der Erfindung mit einer in Form von Oberflächenmarkierungen aufgebrachten Glasur und
- Fig. 7: eine schematische Darstellung einer Ofenmuffel aus einem erfindungsgemäßen Plattenmaterial.

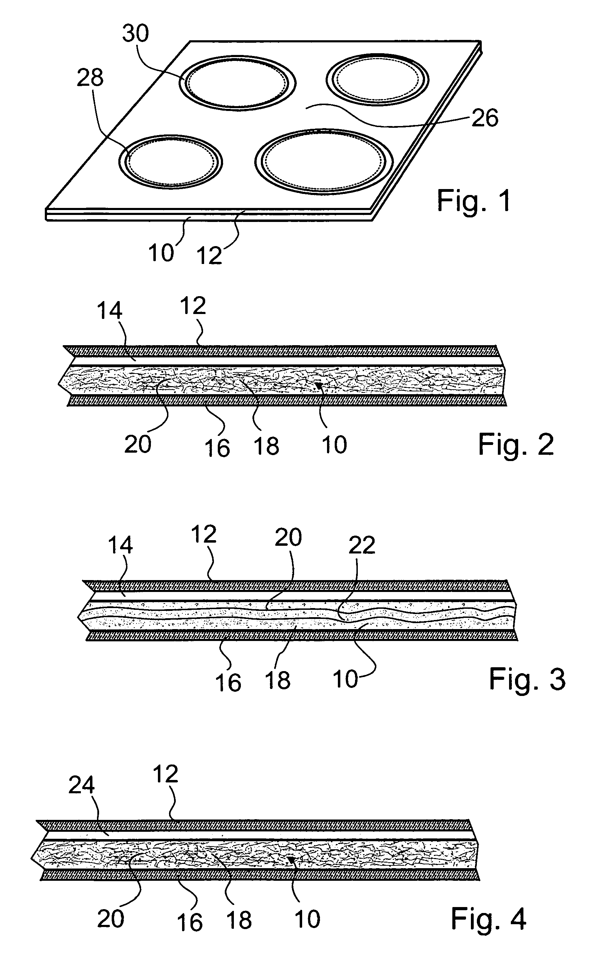

Figur 1 zeigt schematisch ein Kochfeld mit einer Abdeckplatte 26 aus einem Plattenmaterial. Die Abdeckplatte 26 weist eine beschichtete Oberseite zum Aufstellen von Kochgeschirrelementen auf, die glatt und leicht zu reinigen ist, sowie eine Rückseite (nicht dargestellt), in deren unmittelbarer Nähe Induktionsheizelemente 28 zum Beheizen von auf die Abdeckplatte 26 aufgestellten Kochgeschirrelementen angeordnet sind. Die erfindungsgemäße Abdeckplatte 26 ist zum Einsatz in den Induktionskochfeldern mit einem klassischen Muldenspiegel wie auch für Induktionskochfelder vom Matrix- bzw. Mikromodultyp mit einer Vielzahl von kleinen, in einem Raster angeordneten Induktoren einsetzbar. Ferner ist ein Einsatz in Kochfeldern mit Strahlungsheizkörpern denkbar.

Figur 2 zeigt das Plattenmaterial der Abdeckplatte 26 aus Figur 1 in einer Schnittdarstellung, die den Schichtaufbau des Plattenmaterials zeigt. Das Plattenmaterial besteht aus einem Basismaterial 10 und mehreren Beschichtungen 12, 14, 16. Die in Figur 2 dargestellte Orientierung entspricht der Orientierung der Abdeckplatte 26 im Betriebszustand. Die Beschichtung 12 bildet die horizontal ausgerichtete Oberseite des Kochfelds, und die Beschichtung 16 bildet die Rückseite des Kochfelds.

Wie in Figur 2 schematisch dargestellt, besteht das Basismaterial 10 aus einer keramischen Matrix 18 und homogen mit dem Material der Matrix 18 vermischten Verstärkungsfasern 20. Das Basismaterial 10 ist ein in einem Kaltpressverfahren hergestelltes Pressmaterial. Zur Herstellung des Basismaterials 10 wird das Material, das die keramische Matrix 18 bildet, mit den Verstärkungsfasern 20 vermischt und unter sehr hohem Druck zu einer Platte gepresst.

In einem bevorzugten Ausführungsbeispiel ist das Material der Matrix 18 reines Quarzmehl, das durch den Druck und ggf. Temperatureinwirkung durch beigefügte Bindungsmittel angeschmolzen und/oder gebunden wird. Dabei kann beispielsweise in mikroskopischen oder nanoskopischen Bereichen an Korngrenzen der Quarzmehl-Mikrokristalle eine glasartige Phase entstehen, die eine Bindung und eine insgesamt keramische Struktur der Matrix 18 erzeugt.

Das so entstehende Basismaterial 10 ist durch Verstärkungsfasern 20 verstärkt. Die Verstärkungsfasern 20 sind im bevorzugten Ausführungsbeispiel Glasfasern. Das Material der Matrix 18 wäre ohne diese Verstärkungsfasern 20 sehr weich und brüchig, beispielsweise von einer kreideartigen oder kalksteinartigen Konsistenz. Durch die Verstärkungsfasern 20 erhält das Basismaterial 10 jedoch eine hohe Biegesteifigkeit und Bruchfestigkeit, wenn man Kräfte großflächig, d.h. mit Auflageflächen von mehreren Quadratmillimetern, auf das Material ausübt.

In alternativen Ausführungsbeispielen sind die Verstärkungsfasern 20 Polymerfasern, beispielsweise Teflon oder Aramid. In weiteren alternativen Ausführungsbeispielen sind die Verstärkungsfasern 20 Kohlefasern, Mullit oder Siliziumcarbid. In bevorzugten Ausführungsbeispielen sind die Verstärkungsfasern 20 Glasfasern. Ferner sind Mischungen dieser Fasern denkbar. Zur Herstellung der Matrix 18 kann dem Quarz ein kleiner Anteil anderer keramischer Materialien beigemischt werden. Ferner ist es denkbar, die Matrix 18 aus reinem Aluminiumoxid/Tonerde oder aus Tonerde mit einer Beimischung von anderen keramischen Materialien herzustellen.

Die unmittelbar auf dem Basismaterial 10 aufgebrachte Beschichtung 14 ist eine Siebdruckschicht, die Oberflächenmarkierungen 30 der Abdeckplatte 26 bildet. Die Siebdruckschicht 14 ist durch eine von einer Glasur gebildeten Beschichtung 12 geschützt. Die Glasur 12 ist glasartig und transparent, so dass die Siebdruckschicht 14 und in Bereichen ohne Siebdruckschicht 14 das Basismaterial 10 für den Benutzer von der Oberseite der Abdeckplatte 26 aus sichtbar bleibt.

Die Verstärkungsfasern 20 in dem Basismaterial 10 sind möglichst lang und haben eine Dicke von 6 bis 7 µm. Die Dicke des Basismaterials liegt zwischen 3 und 4 mm, die Dicke der Siebdruckschicht 14 liegt zwischen 50 und 100 µm und die Dicke der Glasur 12 liegt zwischen 50 und 200 µm. Ferner ist die Abdeckplatte 26 bzw. das Basismaterial 10 noch auf der Rückseite mit einer weiteren Beschichtung 16 ausgestattet, die ebenfalls eine Glasur ist. Dadurch wird eine Porosität der Rückseite des Basismaterials 10 ebenso wie die Porosität der Oberseite des Basismaterials 10 verschlossen, und ein Abbröckeln von losen Partikeln des auf mikroskopischer Skala brüchigen Basismaterials 10 in den Raum unterhalb der Abdeckplatte 26, der die Elektronik des Kochfelds beherbergt, kann vermieden werden.

Das Basismaterial 10 ist im Wesentlichen weiß oder leicht grau und undurchsichtig, so dass sich durch die Siebdruckschicht 14, die in allen denkbaren Farben aufgebracht werden kann, zusammen mit der Glasur 12 ein völlig neuartiges Erscheinungsbild und neue Möglichkeiten für ein Design des Kochfelds ergeben.

Das Basismaterial 10 hat eine sehr hohe Porosität mit mikroporösen oder mesoporösen Poren von einigen Nanometern Größe. Dadurch wird die thermische Leitfähigkeit des Basismaterials 10 stark reduziert, so dass heiße Kochgeschirrelemente auf der Abdeckplatte 26 die unter der Abdeckplatte 26 angeordnete Elektronik nur schwer erhitzen können. Durch eine geeignete Wahl des bei der Herstellung des Basismaterials im Kaltpressverfahren ausgeübten Drucks kann die Porengröße optimal eingestellt werden. Versuche haben gezeigt, dass eine Porosität von ungefähr 30% oder in einem Bereich zwischen 20 % und 40 % zu einem sehr zufrieden stellenden Ergebnis führt.

Figur 3 zeigt ein alternatives Ausführungsbeispiel der Erfindung, in welchem die Verstärkungsfasern 20 dem Basismaterial 10 nicht beigemischt sind, sondern ein Gewebe 22 bilden, das in die Matrix 18 aus keramischem Siliziumdioxid eingearbeitet ist.

Das Gewebe 22 kann durch dem Matrixmaterial lose beigemischte Verstärkungsfasern ergänzt werden. Es können eine oder mehrere Gewebeschichten in das Plattenmaterial eingearbeitet werden. Wenn zumindest eine Gewebeschicht in unmittelbarer Nähe einer Oberfläche in das Plattenmaterial eingearbeitet ist, kann die Oberflächenfestigkeit weiter verbessert werden.

Figur 4 zeigt ein weiteres alternatives Ausführungsbeispiel der Erfindung, in welchem das Basismaterial 10 aus einer keramischen Matrix 18 und Verstärkungsfasern 20 mit einer ferromagnetischen Schicht 24, insbesondere aus Graphit, beschichtet ist. Das Basismaterial 10 ist porös und umfasst Lufteinschlüsse, die die thermische Leitfähigkeit des Basismaterials 10 stark reduzieren. Die ferromagnetische Schicht 24 ist durch eine Beschichtung 12 aus Siliziumcarbid geschützt.

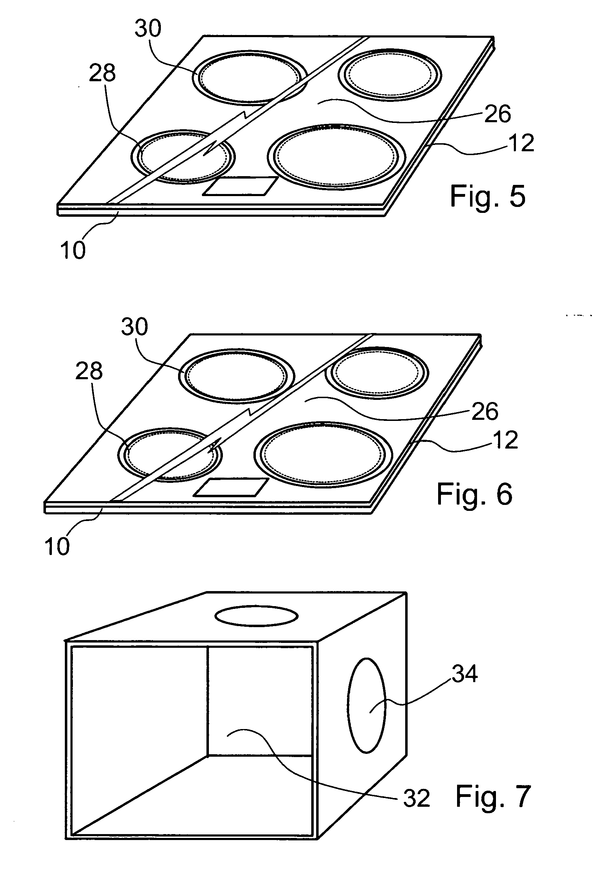

Die ferromagnetische Schicht 24 aus Figur 4 kann von einer Rückseite (in Figur 4 unten) aus induktiv erhitzt werden. Daher kann das Plattenmaterial gemäß Figur 4 vorteilhaft zur Herstellung einer Ofenmuffel 32 verwendet werden, wobei die Beschichtung 12 einem Innenraum der Ofenmuffel 32 zugewandt ist und das Basismaterial 10 die Ofenmuffel 32 nach außen isoliert (siehe Figur 7).

Figur 5 zeigt eine erfindungsgemäße Abdeckplatte 26 eines Induktionskochfelds mit Oberflächenmarkierungen 30, die durch eine Glasur 12 geschützt sind. Die Oberflächenmarkierungen 30 sind als eine Siebdruckschicht ausgebildet und können in jeder beliebigen Farbe oder auch mehrfarbig ausgestaltet werden.

Figur 6 zeigt ein weiteres alternatives Ausführungsbeispiel der Erfindung, in welcher die Oberflächenmarkierungen 30 Teil einer Beschichtung 14 (Figur 2) sind, die als farbige Glasur ausgebildet ist. Diese farbige Glasur ist durch eine zweite, transparente Glasur geschützt, die eine Beschichtung 12 bildet.

Figur 7 zeigt eine Ofenmuffel 32 für einen Backofen oder Brennofen, beispielsweise für einen industriellen Emaillierungs-Brennofen, in welchem die Wände der Ofenmuffel 32 aus dem erfindungsgemäßen Plattenmaterial gemäß dem Ausführungsbeispiel aus Figur 4 hergestellt sind, das mit einer ferromagnetischen Schicht 24 aus Graphit ausgestattet ist.

Außerhalb der Ofenmuffel 32 sind Induktoren 34 angeordnet, welche die ferromagnetische Schicht 24 (Figur 4) von außen beheizen. Heizelemente innerhalb der Muffel 32 können vermieden werden, was die Reinigungseigenschaften deutlich verbessert. Im Vergleich zu außerhalb der Ofenmuffel 32 angeordneten Strahlungsheizkörpern und einer Muffel aus Metall können deutliche Gewichtseinsparungen erreicht werden und der Wirkungsgrad kann verbessert werden.

### Bezugszeichen

- 10: Basismaterial
- 12: Beschichtung
- 14: Beschichtung
- 16: Beschichtung
- 18: Matrix
- 20: Verstärkungsfasern
- 22: Gewebe
- 24: Schicht
- 26: Abdeckplatte
- 28: Induktionsheizelement
- 30: Oberflächenmarkierung
- 32: Ofenmuffel
- 34: Induktor
- D: Dicke

## Patentansprüche

1. Plattenmaterial, insbesondere Kochfeld-Abdeckplatte, bestehend aus einem Basismaterial (10) und wenigstens einer Beschichtung (12, 14, 16),
**dadurch gekennzeichnet, dass** das Basismaterial (10) ein aus einer keramischen Matrix (18) und Verstärkungsfasern (20) hergestelltes Pressmaterial ist.

2. Plattenmaterial nach Anspruch 1, **dadurch gekennzeichnet, dass** die Verstärkungsfasern (20) Glasfasern umfassen.

3. Plattenmaterial nach einem der vorhergehenden Ansprüche, **dadurch gekennzeichnet, dass** die Verstärkungsfasern (20) zumindest teilweise ein Gewebe (22) bilden.

4. Plattenmaterial nach einem der vorhergehenden Ansprüche, **dadurch gekennzeichnet, dass** eine Dicke (D) des Basismaterials (10) zwischen 3 mm und 4 mm liegt.

5. Plattenmaterial nach einem der vorhergehenden Ansprüche, **dadurch gekennzeichnet, dass** die keramische Matrix (18) zumindest im Wesentlichen aus polykristallinem Quarz gebildet ist.

6. Plattenmaterial nach einem der vorhergehenden Ansprüche, **gekennzeichnet durch** eine Temperaturbeständigkeit bis zu wenigstens 1200°C.

7. Plattenmaterial nach einem der vorhergehenden Ansprüche, **dadurch gekennzeichnet, dass** das Basismaterial (10) ein kaltgepresstes Material ist.

8. Plattenmaterial nach einem der vorhergehenden Ansprüche, **dadurch gekennzeichnet, dass** die Beschichtung (12) eine Glasur umfasst.

9. Plattenmaterial nach einem der vorhergehenden Ansprüche, **dadurch gekennzeichnet, dass** die Beschichtung (12) eine Glasur umfasst, die in der Form von Oberflächenmarkierungen aufgebracht ist.

10. Plattenmaterial nach einem der vorhergehenden Ansprüche, **dadurch gekennzeichnet, dass** die Beschichtung (12, 14) eine Glasur und eine zwischen der Glasur und dem Basismaterial (10) aufgebrachte Siebdruckschicht (14) mit Oberflächenmarkierungen umfasst.

11. Plattenmaterial nach einem der vorhergehenden Ansprüche, **dadurch gekennzeichnet, dass** das Plattenmaterial beidseitig Beschichtungen (12, 14, 16) aufweist.

12. Plattenmaterial nach einem der vorhergehenden Ansprüche, **dadurch gekennzeichnet, dass** das Basismaterial (10) porös ist und eine Porosität zwischen 20 % und 35 % hat.

13. Plattenmaterial nach einem der vorhergehenden Ansprüche, **gekennzeichnet durch** eine ferromagnetische Schicht (24) zum induktiven Heizen des Plattenmaterials.

14. Kochfeld mit einer Abdeckplatte aus einem Plattenmaterial nach einem der vorhergehenden Ansprüche.

15. Verfahren zum Herstellen eines Plattenmaterials nach einem der Ansprüche 1 - 13, insbesondere zur Verwendung als Kochfeld-Abdeckplatte, wobei wenigstens eine Beschichtung (12, 14, 16) auf ein Basismaterial (10) aufgebracht wird, **dadurch gekennzeichnet, dass** das Basismaterial (10) durch Kalt- oder Heißpressen aus einer keramischen Matrix (18) und aus Verstärkungsfasern (20) hergestellt wird.

## Claims

1. Plate material, particularly cooker hob top plate, consisting of a base material (10) and at least one coating (12, 14, 16), **characterised in that** the base material (10) is a press-moulded material produced from a ceramic matrix (18) and reinforcing fibres (20).

2. Plate material according to claim 1, **characterised in that** the reinforcing fibres (20) comprise glass fibres.

3. Plate material according to one of the preceding claims, **characterised in that** the reinforcing fibres (20) form at least in part a fabric (22).

4. Plate material according to any one of the preceding claims, characterised that the thickness (D) of the base material (10) is between 3 millimetres and 4 millimetres.

5. Plate material according to any one of the preceding claims, **characterised in that** the ceramic matrix (18) is formed at least substantially from polycrystalline quartz.

6. Plate material according to any one of the preceding claims, **characterised by** a temperature resistance of up to at least 1200° C.

7. Plate material according to any one of the preceding claims, **characterised in that** the base material (10) is a cold-pressed material.

8. Plate material according to any one of the preceding claims, **characterised in that** the coating (12) comprises a glaze.

9. Plate material according to any one of the preceding claims, **characterised in that** the coating (12) comprises a glaze which is applied in the form of surface markings.

10. Plate material according to any one of the preceding claims, **characterised in that** the coating (12, 14) comprises a glaze and a screen-printed layer (14), which is applied between the glaze and the base material (10), with surface markings.

11. Plate material according to any one of the preceding claims, **characterised in that** the plate material has coatings (12, 14, 16) at both sides.

12. Plate material according to any one of the preceding claims, **characterised in that** the base material (10) is porous and has a porosity between 20% and 35%.

13. Plate material according to any one of the preceding claims, **characterised by** a ferromagnetic layer (24) for inductive heating of the plate material.

14. Cooker hob with a top plate of a plate material according to any one of the preceding claims.

15. Method of producing a plate material according to any one of claims 1 to 13, particularly for use as a cooker hob top plate, wherein at least one coating (12, 14, 16) is applied to a base material (10), **characterised in that** the base material (10) is produced by cold-pressing or hot-pressing from a ceramic matrix (18) and reinforcing fibres (20).

## Revendications

1. Matériau en plaque, notamment plaque de recouvrement de champ de cuisson, constitué d'un matériau de base (10) et d'au moins un revêtement (12, 14, 16), **caractérisé en ce que** le matériau de base (10) est un matériau de pressage fabriqué à partir d'une matrice céramique (18) et de fibres de renforcement (20).

2. Matériau en plaque selon la revendication 1, **caractérisé en ce que** les fibres de renforcement (20) comprennent des fibres de verre.

3. Matériau en plaque selon l'une quelconque des revendications précédentes, **caractérisé en ce que** les fibres de renforcement (20) forment au moins en partie un tissu (22).

4. Matériau en plaque selon l'une quelconque des revendications précédentes, **caractérisé en ce qu'**une épaisseur (D) du matériau de base (10) est située entre 3 mm et 4 mm.

5. Matériau en plaque selon l'une quelconque des revendications précédentes, **caractérisé en ce que** la matrice céramique (18) est formée au moins essentiellement en quartz polycristallin.

6. Matériau en plaque selon l'une quelconque des revendications précédentes, **caractérisé par** une résistance à la température jusqu'à au moins 1200°C.

7. Matériau en plaque selon l'une quelconque des revendications précédentes, **caractérisé en ce que** le matériau de base (10) est un matériau pressé à froid.

8. Matériau en plaque selon l'une quelconque des revendications précédentes, **caractérisé en ce que** le revêtement (12) comprend un vernis.

9. Matériau en plaque selon l'une quelconque des revendications précédentes, **caractérisé en ce que** le revêtement (12) comprend un vernis qui est appliqué en forme de marques en surface.

10. Matériau en plaque selon l'une quelconque des revendications précédentes, **caractérisé en ce que** le revêtement (12, 14) comprend un vernis et une couche de sérigraphie (14) appliquée entre le vernis et le matériau de base (10), munie de marques en surface.

11. Matériau en plaque selon l'une quelconque des revendications précédentes, **caractérisé en ce que** le matériau de base (10) présente des revêtements (12, 14, 16) des deux côtés.

12. Matériau en plaque selon l'une quelconque des revendications précédentes, **caractérisé en ce que** le matériau de base (10) est poreux et a une porosité comprise entre 20% et 35%.

13. Matériau en plaque selon l'une quelconque des revendications précédentes, **caractérisé par** une couche ferromagnétique (24) pour le chauffage inductif du matériau en plaque.

14. Champ de cuisson comprenant une plaque de recouvrement dans un matériau en plaque selon l'une quelconque des revendications précédentes.

15. Procédé de fabrication d'un matériau en plaque selon l'une quelconque des revendications 1 à 13, notamment pour l'utilisation en tant que plaque de recouvrement de champ de cuisson, au moins un revêtement (12, 14, 16) étant appliqué sur un matériau de base (10), **caractérisé en ce que** le matériau de base (10) est fabriqué par pressage à froid ou à chaud à partir d'une matrice céramique (18) et de fibres de renforcement (20).
